Europäisches Patentamt

European Patent Office

Office européen des brevets

(11) Publication number: **0 451 302 A1**

# EUROPEAN PATENT APPLICATION

(21) Application number: 90105903.0

(22) Date of filing: 28.03.90

(51) Int. Cl.⁵: **G07F 9/10, A47J 37/12**

The title of the invention has been amended (Guidelines for Examination in the EPO, A-III, 7.3).

(43) Date of publication of application:
**16.10.91 Bulletin 91/42**

(84) Designated Contracting States:
**AT BE CH DE ES FR GB GR LI NL SE**

(71) Applicant: **T.A. S.R.L. TECNOLOGIE ALIMENTARI**

36, Via Cairoli
I-27029 Vigevano (Pavia)(IT)

(72) Inventor: **Ferraris, Carlo**
36, Via Cairoli
I-27029 Vigevano (Pavia)(IT)

(74) Representative: **Ferraiolo, Ruggero et al**
**FERRAIOLO RUGGERO & CO. s.n.c. Via Napo Torriani, 10**
I-20124 Milano(IT)

(54) Machine for quickly serving a portion of cooked food.

(57) A machine to serve an express helping of fried food, under selection of a consumer, comprising: a frigorific container (2) to contain a supply of food, a means (3) that makes easier part of said supply to fall into a cavity (4) of a dispenser member (5) delivering a helping of food to a mesh container (9). Said mesh container (9) is contained in a cooking chamber (6) and is dipped in a cooking tank (7) which contains oil and an electric resistance (8). Once the helping of food is fried, a motor (23) upsets said container (9) in order to deliver said helping to a container (10) for the consumer.

Fig.1

The present invention relates to a machine to serve an express helping of done food. More particularly, the invention relates to a machine to serve an express helping of done food such as frie potatoes, rissoles, croquettes, small fishes and the like.

Arrangements are known in which a consumer draws a potatoe helping from a container of stripped raw potatoes, puts the potatoe helping in a basket dipped in frying oil and receives the fried potatoe helping which is upset in a container by a mechanical device once expired the time required for correctly fry the potatoes is expired. The drawing of the raw potatoes is paid to a clerk or by introducing some coins in a coin-box.

The drawbacks of the known arrangements mainly consist in the short sanitary control of the raw foods, in the high probability of small or serial accidents for the consumer and the clerk due to the handling of hottest material and in the impossibility of installing the arrangement wherever desired because of the produced smells and dirt.

The machine according to the present invention, as characterized in the claims, obviates the above drawbacks and solves the problem to provide a consumer with a just done food helping in a completely automatic way.

An embodiment of the present invention is described herebelow with reference to the enclosed drawings in which

Fig. 1 is a lateral view partly in section of a machine suitable to serve an express helping of fried potatoes,

Fig. 2 is a section through I-I of Fig. 1 of a part of the machine.

The machine that will be described is contained in a stainless steel case 1. A frigorific container 2 can contain at -20° C a supply of stripped raw potatoes brought in from a cover showed by reference letter P. A means 3 keeps in motion the potatoes either to ventilate the mass or to make easier the fall thereof into a cavity 4 of a dispenser means 5 made in teflon which may be pivoted about an horizontal axis. Under the frigorific container 2 there is a thermically insulated cooking chamber 6 in which there are: a cooking station comprising a cooking tank 7 which can be filled with palm oil kept at the temperature of 180° C by an electric resitance 8. A first mesh container 9 has an arm integral with a motor 23 imparting to said container,under control and in sequence, the following positions: upper position, as shown in solid line in the drawing, to receive a potatoe helping from the cavity 4 of the dispenser means 5 when the latter is rotated of 180° C; lower position, as shown by 9' and in short dashes line in the drawing, to be dipped in the oil in the cooking tank 7; upper position again, to let the oil drip from the fried potatoes; upset outside the cooking chamber 6, as shown by 9" in short dashes line to let the fried potatoes helping drip in a second container 10 delivered to the delivery station 11 by a not shown container stack 10; upper position again.

Under the cooking chamber 6 there are: a container 12 in which no longer fresh palm oil is released by gravity once the forty hours of operation at the temperature of 180° C are expired; the release happens when a timer, not shown, drives an elettric-valve 13 located on the bottom of the cooking tank 7; a container 14 containing fresh palm oil. A pump 15 transfers the fresh oil along the duct 16 from the container 14 to the cooking tank 7 as soon as the release of the no longer fresh oil is completed.

At the top of the cooking chamber 6 there is an air intake 17 which places in comunication the inside of the cooking chamber with the environment outside the machine, through a duct 18. An exhaust fan 19 intakes the air along the duct 18 from the cooking chamber, which air is filtered by an activated carbon filter 20.

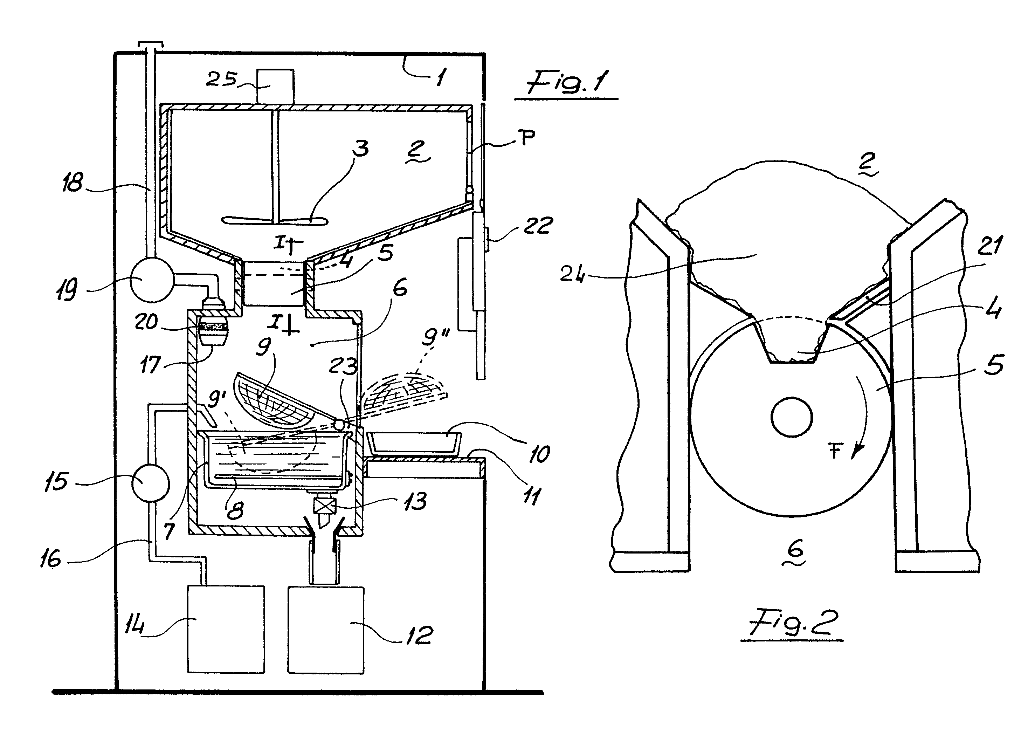

Fig. 2 shows the dispenser means 5 which is rotated following the arrow F when the machine is driven: the cutter 21, extending through the whole length of means 5, makes the potatoes projecting from the cavity 4 to be keep above the cavity itself or makes them cutted to leave a portion within the cavity and the other portion in the heap 24 of the stripped potatoes.

The machine operates as follows: the inside of the frigorific container 2 is always kept at the temperature of -20° C, the motor 25 always keeps in rotation the stirrer means 3, the electric resistance 8 is always energized to keep the oil at the temperature of 180° C in the cooking tank 7 and the fan 19 is always in operation to keep the cooking chamber 6 ventilated. A coin-box 22 receives coins as price for a fried potatoe helping (optionally it can receive further coins as price for an additional service, for example, for a sauce helping which is dispensed in sealed small envelopes stored in a suitable container, in the machine, (not shown). Once the required coin amount is introduced in the coin-box, a conventional electro-mechanical device drives, in sequence, the rotation of 180° C of the dispenser means 5, so that a potatoe helping falls from the cavity 4 into the first container 9 in the upper position; the electric motor 23 is controlled by a first timer to carry a first time the first container 9 to the position 9' in which the potatoes are dipped in the oil; a second time to carry back the container 9 to the upper position after a fixed period, suitable to correctly fry the potatoes (optionally, the timer can be adjusted within certain limits by the consumer to make the potatoes fry more or less); a third time to carry the container 9 to the position 9" upset in such a way that the fried potatoe helping falls into the second container 10 which, in the meantime, has been delivered to the deliver station 11 and a fourth time to carry back the container 9 in the upper position. A second timer makes the electric-valve 13 open and disconnects the electric resistance 8 after an oil service of forty hours and, once the oil is released in the container 12, said timer drives the pump 15 for the time sufficient to transfer the correct amount of fresh oil from the container 14 to the tank 7 and, therefore, reinserts the electric resistance 8.

**Claims**

1. Machine for serving an express helping of done food comprising a coin-box to receive tokens or coins, control means for all the functional parts of the machine activated by the tokens or coins, a dispenser means delivering to a consumer a helping of food to be cooked within a container, a cooking station in which said container for cooking the food helping is located, a further container in which the done food helping is poured characterized in that it comprises: a frigorific container to keep at a desired constant temperature a raw food supply; a dispenser means suitable to receive a raw food helping from said frigorific container and to deliver it in a first cooking container located in a cooking chamber; a cooking station in said cooking chamber to carry and keep the raw food helping at the conditions required to cook said helping; a means for transferring the done food helping from said first container to a second container located in a station delivering the done food helping.

2. Machine according to claim 1 characterized in that it comprises: the dispenser means in the form of a cylindrical element with its axis in a horizontal position to close the opening in the bottom of the frigorific container bearing a cavity suitable to receive a food helping from the frigorific container controlled by a drive means to rotate of 180° the first time when said helping has to be deliverd in said first container and a second time to rotate of 180° to be ready to receive a further food helping in said cavity; a means to keep in motion the raw food in the frigorific container; an exhaust fan for intaking air, accidental smoke and smells from the cooking chamber and filtering them through a filter before releasing them outside the machine; a store for a supply of the second done food container; a means for transferring a second container from said store to said station which deliver the done food helping before said helping is transferred from said first cooking container.

3. Machine according to claims 1 e 2 characterized in that the cooking station comprises: a cooking tank in which a cooking liquid is kept at a temperature suitable to cook the food contained in said frigorific container and a first container in the form of a mesh or perforated basket to which a first upper position is imparted at the level of said cooking liquid to receive a raw food helping from said dispenser means, then a second position in which said helping is dipped in the cooking liquid; then again the first position to let the cooking liquid drip; a third position in which the done food helping is made to fall in said second done food container; finally said upper position again.

4. Machine according to claim 3 characterized in that it comprises a first container in which the no longer fresh cooking liquid is released from said cooking tank; a second container with fresh cooking liquid; a means transferring fresh cooking liquid in said cooking tank from said second container as soon as the no longer fresh cooking liquid is made to leave said cooking tank.

5. Machine according to claim 4 characterized in that a pump along the duct connecting said second container with said cooking tank is driven as soon as the no longer fresh cooking liquid has been released to supply said fresh cooking liquid tank.

6. Machine according to claims 3 and 4 characterized in that the cooking liquid is water for boiling some foods.

7. Machine according to claim 1 and 2 characterized in that the cooking station comprises a microwaves cooking device.

9. Machine according to claims 1 and 2 characterizd in that the cooking station comprises a infrared cooking device.

10. Machine according to claims 1 and 2 characterized in that the cooking station comprises a ultrasound cooking device.

_Fig.1_

_Fig.2_

European
Patent Office

**EUROPEAN SEARCH REPORT**

Application Number

**EP 90 10 5903**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IT-U-2 118 97   (FERRARIS CARLO)<br>* the whole document *<br>– – – | 1-10 | G 07 F 9/10<br>A 47 J 37/12 |
| X,A | DE-A-2 256 108   (MASCRET)<br>* page 1, line 1 - page 2, line 31; figure 1 * * page 3, line 5 - page 4, line 21; claims 1-5 *<br>– – – | 1-3,6,7,<br>8-10 | |
| X,A | US-A-4 417 505   (PIETROBELLI)<br>* the whole document *<br>– – – | 1,2 | |
| X,A | US-A-3 690 247   (VAN CLEVEN ET.AL.)<br>* column 1, line 25 - column 2, line 47 * * column 3, line 9 - column 5, line 12 @ claims 1, 2; figures 1, 5-10 *<br>– – – | 1,3,6,2,4,<br>7 | |
| X | WO-A-8 402 457   (CUBI-CUBES PTY LTD)<br>* page 4, lines 20 - 23; claims 1-3, 7 * * page 7, line 10 - page 9, line 27 * * figures 1-5 *<br>– – – | 1-3,6,7 | |
| X,A | EP-A-0 234 996   (BEAUVALET)<br>* abstract; claims 1, 2; figure 2 * * page 1, line 1 - page 2, line 11 * * page 3, line 3 - page 4, line 15 *<br>– – – | 1,3-7,2 | |
| X,A | EP-A-0 140 987   (INTERIMPORT F. CACEFFO)<br>* abstract; claims 1-3; figure 1 *<br>– – – | 1,3-5,7,2,<br>6 | TECHNICAL FIELDS<br>SEARCHED (Int. Cl.5)<br><br>G 07 F<br>A 47 J |
| A | DE-A-2 205 631   (PAAR)<br>* the whole document *<br>– – – | 1,8 | |
| X | EP-A-0 060 204   (MARIOTTI)<br>* abstract; claims 1-6; figures 1, 2 * * page 2, lines 7 - 27 * * page 7, line 10 - page 8, line 34 *<br>– – –<br><div align="right">–/–</div> | 1-7 | |

| | | |
|---|---|---|
| | The present search report has been drawn up for all claims | |
| Place of search | Date of completion of search | Examiner |
| The Hague | 23 November 90 | GUIVOL,O. |

**European Patent Office**

# EUROPEAN SEARCH REPORT

Application Number

**EP 90 10 5903**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 944 678 (PRATOLONGO)<br>* abstract; claims 1, 5, 6; figures 1, 2 * * column 1, lines 1 - 52 * * column 2, lines 1 - 57 *<br>— — — | 1-5,7 | |
| A | FR-A-2 593 308 (INGENIERIE TECHNIQUES ELECTRIQUES ELECTRONIQUES APPLIQUEES)<br>* the whole document *<br>— — — | 1-7 | |
| A | WO-A-8 607 648 (HOEBERIGS)<br>* page 1, lines 6 - 10 *<br>— — — — — | 8-10 | |
| | | | **TECHNICAL FIELDS SEARCHED (Int. Cl.5)** |

| | | |
|---|---|---|
| The present search report has been drawn up for all claims | | |
| Place of search | Date of completion of search | Examiner |
| The Hague | 23 November 90 | GUIVOL,O. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document